(19)

Europäisches
Patentamt
European
Patent Office
Office européen
des brevets

(11) **EP 1 903 728 A1**

(12) **EUROPEAN PATENT APPLICATION**

(43) Date of publication:
 **26.03.2008 Bulletin 2008/13**

(51) Int Cl.:
 *H04L 25/02* (2006.01)   *H04L 25/03* (2006.01)

(21) Application number: **06019701.9**

(22) Date of filing: **20.09.2006**

(84) Designated Contracting States:
 **AT BE BG CH CY CZ DE DK EE ES FI FR GB GR HU IE IS IT LI LT LU LV MC NL PL PT RO SE SI SK TR**
 Designated Extension States:
 **AL BA HR MK YU**

(71) Applicant: **Nokia Siemens Networks GmbH & Co. KG**
 **81541 München (DE)**

(72) Inventors:
 • **Nisar, Muhammad, Danish**
  **80937 München (DE)**
 • **Nottensteiner, Hans**
  **81543 München (DE)**

(54) **Method and receiving apparatus for estimating a channel in a communications system**

(57)   The present invention provides a method for estimating a channel in a communications system. In the communications system, data is transmitted in at least one unit. The channel is estimated based on a first pilot symbol and on a second pilot symbol, resulting in a first pilot estimation output and a second pilot estimation output. For each received unit, the method comprises the following steps: In a first step, a first channel estimation is determined by utilizing said first and second pilot estimation output according to a first channel estimation scheme. In a second step, a second channel estimation is determined by utilizing said first and second pilot estimation output according to a second channel estimation scheme. In a third step, the method selects between said first and said second channel estimation scheme to be applied based on a decision metric. The decision metric quantifies a distance between expected data and data equalized based on said first and second channel estimation.

FIG 2

1 — Channel Estimation SB1
Output: $H_{SB1}$

2 — Channel Estimation SB2
Output: $H_{SB2}$

3 — Equalisation of LB5 with $H_{SB1}$
Output: $X_{LB5,scheme2}$

4 — Interpolation with $H_{SB1}$ and $H_{SB2}$
Output: $H_{LB1}, H_{LB2}, H_{LB3}, H_{LB4}, H_{LB5}, H_{LB6}$

5 — Equalisation of LB5 with $H_{LB5}$
Output: $X_{LB5,scheme1}$

6 — Calculate decision metric from $X_{LB5, scheme1}$
Output: $D_{scheme1}$

7 — Calculate decision metric from $X_{LB5, scheme2}$
Output: $D_{scheme2}$

8 — $D_{scheme1} > F D_{scheme2}$

9a   yes   no   9b

Equalisation of LB1 to 6 with $H_{SB1}$

Equalisation of Lb1 to 6 with $H_{LB1}$ to $H_{LB6}$

EP 1 903 728 A1

**Description**

The present invention relates to a method and receiving apparatus for estimating a channel in a communications system.

In a communications system, data is transmitted over channels in the form of space/time coded symbols.

Enhanced UTRA (E-UTRA) is the long term evolution (LTE) of the Universal Mobile Telecommunications System (UMTS) currently standardized in the 3rd Generation Partnership Project (3GPP).

In a receiver of an Orthogonal Frequency Division Multiplex (OFDM)-based mobile radio transmission system (E-UTRA, WiMAX etc.) an estimation of the channel transfer function has to be performed. This estimate is used by the equalizer to remove the influence of the channel on the transmitted symbols.

To support the channel estimation, pilot symbols are transmitted on the sub-carriers at certain time steps. These pilot symbols are known at the receiver.

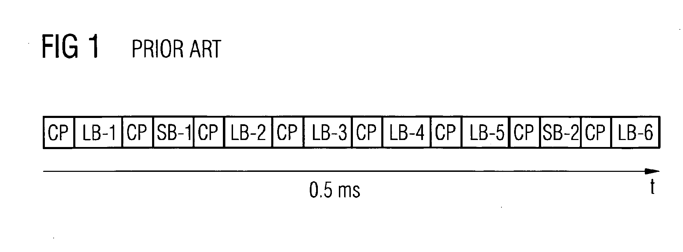

Fig. 1 (prior art) shows the time arrangement of OFDM symbols for the case of the E-UTRA system. The figure shows a time sequence of eight OFDM symbols, building a sub frame, i.e. a unit of data to be transmitted. Each OFDM symbol consists of multiple orthogonal frequency carriers. The sub frame consists of short two blocks SB-1, SB-2 containing pilot symbols and six long blocks LB-1 to LB-6 containing data. Each of the OFDM symbols LB-1 to LB-6 and SB-1, SB-2 has a preceding cyclic prefix time interval CP to avoid inter-symbol interference.

For the time instants where SB-1 and SB-2 are received the current channel transfer function can be estimated by well known methods like Maximum Likelihood Estimation or Minimum Mean Square Error Estimation [1].

To detect and reconstruct the data symbols which are transmitted at LB-1 to LB-6, estimates of the channel transfer function for the corresponding time instants are necessary. These intermediate channel estimates corresponding to the channel states at time instants LB-1 to LB-6 have to be derived from the channel estimates calculated at the time instants of SB-1 and SB-2 using the transmitted pilot symbols.

This task of deriving channel estimates at the intermediate positions in time has been quite well researched for the case when the pilot symbols are identical, i.e. both SB are concentrated over the sub-carriers allotted to the user (case 1).

The E-UTRA specifications [4] however include the possibility of the case when one of the SB is spread over the entire system spectrum so as to allow channel dependent frequency domain scheduling (case 2).

In case 1, both SB, i.e. both transmitted pilot symbols, are concentrated over a chunk. In this case, the following solution is known. Given the sub frame structure in Fig.1, there exist 2-D FIR Wiener filters that are optimal in sense of minimizing the mean square error (MSE) [2]. These methods require in general channel scattering functions. By accepting channel estimates at pilot sub-carriers as their input, these methods yield channel estimates over the entire time and frequency grid.

In order to reduce receiver complexity, it is possible to adopt a cascaded interpolation approach. In this approach, first a minimum mean-square error (MMSE) based frequency domain interpolation is performed to arrive at optimal channel estimates at pilot symbol positions. Next, a suitable interpolation along time is carried out to yield channel estimates for the data symbols. Linear interpolation respectively extrapolation is sufficient. This approach has been shown to perform reasonably well as compared to the joint 2-D interpolation [3] along with significantly reduced complexity.

In case 2, one of the SB, i.e. one of the two transmitted pilot symbols, is spread over the entire spectrum.

As mentioned above, there exist no analytical solutions for this case when one of the SB is spread over the entire spectrum. It is important to note that owing to the power constraints and consequent decreased effective Signal-to-noise ratio (SNR) at relevant data sub-carriers, the spread SB leads to significant loss for channel estimation at data sub-carriers.

It is an aim of the invention to address the problems discussed above.

Said problems are solved by the features mentioned in the independent claims. Preferred embodiments of the invention are described in the dependant claims.

The present invention provides a method for estimating a channel in a communications system. In the communications system, data is transmitted in at least one unit. The channel is estimated based on a first pilot symbol and on a second pilot symbol, resulting in a first pilot estimation output and a second pilot estimation output. For each received unit, the method comprises the following steps: In a first step, a first channel estimation is determined by utilizing said first and second pilot estimation output according to a first channel estimation scheme. In a second step, a second channel estimation is determined by utilizing said first and second pilot estimation output according to a second channel estimation scheme. In a third step, the method selects between said first and said second channel estimation scheme to be applied based on a decision metric. The decision metric quantifies a distance between expected data and data equalized based on said first and second channel estimation.

Furthermore, the present invention provides a receiving apparatus for executing the presented method and an according communications system.

The proposed invention provides the advantage that the overall system performance is significantly improved. The invention applies equally well to both cases described above and leads to performance improvements in terms of bit error rate.

Preferred embodiments of the present invention will now be described with reference to the accompanying drawings in which:

> Fig. 1: shows a sub frame structure for OFDM (prior art)

> Fig. 2: shows a flow chart for channel estimation and equalization

> Fig. 1 shows a sub frame structure for OFDM as described above.

Without loss of generality, in the following it is assumed that SB-1 is concentrated over the chunk and SB-2 is spread over the entire spectrum for the purpose of scheduling.

Depending upon the channel time variance scenarios, there are two different competing schemes for channel estimation. Both schemes are described in the following.

The first scheme relates to relatively high channel time variance, e.g. to high vehicular speeds such as 120 km/hr or even 300 km/hr. Channel tracking is necessary, and an interpolation between SB-1 and SB-2 is a must, as the channel variations are high due to the high vehicular speeds. For the above described case 2 with SB-1 and SB-2 being spread over the entire system spectrum, this first scheme means that incorporation of the poor quality estimate from SB-2 is inevitable at high vehicular scenarios.

The second scheme relates to time invariant or slow time varying channels. For the second scheme, channel estimation performance can be improved as follows:

- For case 1: averaging the channel estimates obtained from SB-1 and SB-2. This leads to significantly increased performance at low SNRs where this averaging can lead to effectively reduced noise.
- For case 2: ignoring the poor channel estimate obtained from SB-2. Because the channel stays almost the same during the entire sub frame, the accurate SB-1 channel estimate can be used for equalization of all LBs without incurring any loss due to absence of channel tracking.

The inventive method comprises the step of making a decision between one of the two proposed schemes for each sub frame. Since the two schemes perform well only in exclusive high vehicular motion and low vehicular motion scenarios, a combination of the two approaches results in a significantly improved performance as compared to either one.

The decision strategy is based on the soft equalizer outputs and works as follows.

1. In a first step, one LB (e.g. LB-5) will be equalized using the channel estimate according to the first scheme, producing the output $X_{scheme1}$.

2. In a second step, the same LB will then be equalized using the channel estimate according the second scheme, producing output $X_{scheme2}$.

3. In a third step, a decision metric D is calculated, which represents a measure of the mean detection reliability of all bits of the received LB under the two schemes.

Any distance measure between the received and expected received bits of the at least one LB used in the first and second step can be used, or any measure which is proportional to the log-likelihood-ratio values of the bits. The decision metric that we use can be written as

$$D = \frac{1}{N} \sum_N \left( |x(n)| - |y(n)| \right)^2$$

hereby

- N is the number of bits
- $x(n)$ is the soft output assigned to the nth bit
- $y(n)$ is the expected received value assigned to the nth bit.

In another refinement of the method, instead of using a data symbol (e.g. LB-5) as input for the above described first and second step of equalizing, a pilot signal SB-1, SB-2 is used as input for the equalizer. In this case, the decision metric is advantageously modified as follows:

$$D = \frac{1}{N} \sum_N \left( x(n) - y(n) \right)^2$$

In this case, is it not necessary to use absolute values for $x(n)$ and $y(n)$ as the bits of the pilot signal SB-1, SB-2 are exactly known at the receiver. This refinement offers more robustness of the method with respect to a bad SNR.

The decision metric has to be modified according to the used modulation scheme in order to get the bitwise distance measures.

Under the assumption that the described distance measure D is proportional to the bit error probability, the decision will be done in this way:

- If $D_{scheme1}$ is larger than $D_{scheme2}$ the channel estimates derived from scheme2 will be used for equalization.

- If $D_{scheme1}$ is less than $D_{scheme2}$ the channel estimates derived from scheme1 will be used for equalization.

Inserting a factor F in the decision expression

$$D_{scheme1} > F \ D_{scheme2}$$

allows, for instance, adjusting the switching behavior in accordance with the special system requirements. For example, F < 1.0 leads to a more frequent activation of the interpolation mode and a better performance at high mobile velocity, but to degradation at low velocities and low SNR.

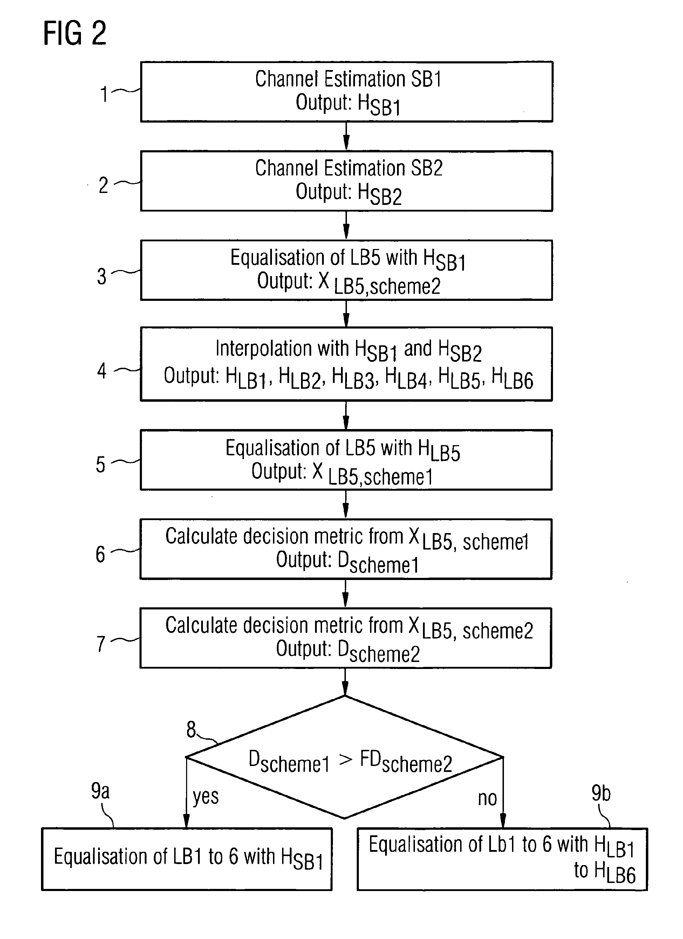

Fig. 2 shows a flow chart for channel estimation and equalization according to the invention.

In the flowchart shown in Fig. 2 the overall channel estimation and equalization process is described for one sub frame according to the invention with the sub frame being structured as shown in Fig. 1. In this case, the pilot symbols on the second short block SB-2 are spread over the full bandwidth.

In a first step 1 of the method shown in Fig. 2, a first channel estimation based on the first pilot symbol received in the first short block SB-1 is performed. The output of the first step 1 is a first estimation output $H_{SB1}$.

In a second step 2, a second channel estimation based on the second pilot symbol received in the second short block SB-2 is performed. The output of the second step 2 is a second estimation output $H_{SB2}$.

In a third step 3, one of the symbols transmitted in a long block LB-1 to LB-6 is equalized using the first estimation output $H_{SB1}$. In the case shown in Fig. 2, the symbol transmitted in the fifth long block LB-5 is equalized. In this case, the equalization accords to the above described second scheme as only the received symbol of the first short block SB-1 is taken into account. The output of the third step 3 is a first equalized output $X_{LB5,scheme2}$.

In a fourth step 4, an interpolation along time to yield channel estimates for the data symbols in the long blocks LB-1 to LB-6 is performed, using the first estimation output $H_{SB1}$ and the second estimation output $H_{SB2}$ as input. The output of the fourth step 4 consists of a set of estimation outputs $H_{LB1}$ to $H_{LB6}$ with one estimation output per each long block LB-1 to LB-6.

In a fifth step 5, the symbol transmitted in the fifth long block LB-5 is equalized again, this time using the estimation output according to the fifth block $H_{LB5}$ calculated in the fourth step 4. In this case, the equalization accords to the above described first scheme as an interpolation based on the first estimation output $H_{SB1}$ and the second estimation output $H_{SB2}$ is performed. The output of the fifth step 5 is a second equalized output $X_{LB5,scheme1}$.

In a sixth step 6, a first decision metric $D_{scheme1}$ is calculated based on the second equalized output $X_{LB5,scheme1}$.

In a seventh step 7, a decision metric $D_{scheme2}$ is calculated based on the first equalized output $X_{LS5, scheme2}$.

In an eighth step 8, a decision is done in the following way:

- If $D_{scheme1}$ is larger than $D_{scheme2}$ equalization of the long blocks LB-1 to LB-6 will be done based on the first estimation output $H_{SB1}$ (first variant of a ninth step 9a)
- If $D_{scheme1}$ is less than $D_{scheme2}$ equalization of the long blocks LB-1 to LB-6 will be done based on the set of estimation outputs $H_{LB1}$ to $H_{LB6}$ (second variant of a ninth step 9b).

In a further refinement of the method, Decision Directed Channel Estimation (DDCE)[3] is introduced. DDCE allows a further performance gain. In this refinement, the detected symbols at the output of the equalizer will be assumed as error free and processed in the same way as the known pilot symbols.

Considering the flow chart in Fig. 2 this means that DDCE would be applied to the output of the third block 3 and the fifth block 5, producing new channel estimates for scheme1 and scheme2. Thereupon the equalization processes, the third block 3 and the fifth block 5 will be repeated with new channel estimates. The calculation of the decision metric values, shown in the sixth block 6 and the seventh block 7, will be done with the new equalizer output.

The presented method allows overall performance gains with respect to the bit error rate. The combination of the two approaches presented as the first scheme and the second scheme results in a significantly improved performance as compared to either one. The presented method is of a very low complexity scheme with almost the same performance as known schemes without switching. The presented method performs especially well if there are differently strong pilot symbols.

The invention is applicable to any transmission system where intermediate channel estimates between pilot symbols or training sequences are used for equalization.

References:

[1] A Comparison of Pilot-Aided Channel Estimation Methods for OFDM Systems, M. Morelli, IEEE Trans. on Signal Proc., Vol.49, NO 12, 2001

[2] OFDM and MC-CDMA, L.Hanzo, Wiley, 2003, Chap.14.6 and 14.7

[3] OFDM and MC-CDMA, L.Hanzo, Wiley, 2003, Chap.15.2

[4] Physical Layer aspects for E-UTRA, 3GPP TR 25.814

**Claims**

1. A method for estimating a channel in a communications system, wherein data is transmitted in at least one unit, and wherein the channel is estimated based on a first pilot symbol (SB-1) and on a second pilot symbol (SB-2), resulting in a first pilot estimation output ($H_{SB1}$) and a second pilot estimation output ($H_{SB2}$), the method comprising for each received unit:

   - in a first step, determining a first channel estimation by utilizing said first and second pilot estimation output ($H_{SB1}$, $H_{SB2}$) according to a first channel estimation scheme,
   - in a second step, determining a second channel estimation by utilizing said first and second pilot estimation output ($H_{SB1}$, $H_{SB2}$) according to a second channel estimation scheme,
   - in a third step, selecting between said first and said second channel estimation scheme to be applied based on a decision metric, with said decision metric quantifying a distance between expected data and data equalized based on said first and second channel estimation.

2. The method in claim 1, wherein said data comprises data symbols (LB-1 to LB-6), and wherein said first step further comprises equalizing received data bits of at least one data symbol (LB-5) based on said first channel estimation, producing a first equalized output ($X_{LB5,scheme2}$), and wherein said second step further comprises equalizing said received data bits of said at least one data symbol (LB-5) based on said second channel estimation, producing a second equalized output ($X_{LB5,scheme1}$), and wherein said decision metric quantifies a distance between said first and second equalized output ($X_{LB5,scheme2}$, $X_{LB5,scheme1}$) and expected data bits of said at least one data symbol (LB-5).

3. The method in claim 1 or 2, wherein said first channel estimation scheme comprises of an interpolation along time based on said first pilot estimation output ($H_{SB1}$) and said second pilot estimation output ($H_{SB2}$).

4. The method in claim 1 or 2, wherein said second channel estimation scheme comprises of using only one of the two pilot estimation outputs ($H_{SB1}$, $H_{SB2}$) as input for estimating the channel.

5. The method in claim 1 or 2, wherein said second channel estimation scheme comprises of using an average of the two pilot estimation outputs ($H_{SB1}$, $H_{SB2}$) as input for estimating the channel

6. The method as claimed in any of the preceding claims, wherein in the third step

   - a first distance ($D_{scheme1}$) is calculated based on the first channel estimation,
   - a second distance ($D_{scheme2}$) is calculated based on the second channel estimation, and
   - selecting between the first and the second channel estimation scheme is based on a comparison of the first distance ($D_{scheme1}$) and the second distance ($D_{scheme2}$), thereby allowing a switching between said first and second channel estimation scheme for each received unit.

7. The method in claim 6, wherein said comparison is based on a decision expression defined by

$$D_{scheme1} > D_{scheme2}.$$

8. The method in claim 7, wherein said decision expression further comprises a threshold value (F) for influencing said switching between said first and second channel estimation scheme.

9. The method in claim 6, 7 or 8, wherein a calculation rule for calculating said first and second decision distance ($D_{scheme1}$, $D_{scheme2}$) is specified by any measure being proportional to log-likelihood-ratio values of said received and expected bits of said first and second pilot symbols (SB-1, SB-2).

10. Receiving apparatus with means for receiving data transmitted on at least one channel, and with means for estimating the channel based on a first pilot symbol (SB-1) and on a second pilot symbol (SB-2), said estimating resulting in a first pilot estimation output ($H_{SB1}$) and a second pilot estimation output ($H_{SB2}$), and with means for equalizing received data, the apparatus further comprising means for:

   - determining a first channel estimation by utilizing said first and second pilot estimation output ($H_{SB1}$, $H_{SB2}$) according to a first channel estimation scheme,
   - determining a second channel estimation by utilizing said first and second pilot estimation output ($H_{SB1}$, $H_{SB2}$) according to a second channel estimation scheme, and

- selecting between said first and said second channel estimation scheme to be applied based on a decision metric, with said decision metric quantifying a distance between expected data and data equalized based on said first and second channel estimation.

11. Communications system with at least one receiving apparatus according to claim 10.

# FIG 1 PRIOR ART

| CP | LB-1 | CP | SB-1 | CP | LB-2 | CP | LB-3 | CP | LB-4 | CP | LB-5 | CP | SB-2 | CP | LB-6 |

0.5 ms → t

# FIG 2

1 — Channel Estimation SB1
Output: $H_{SB1}$

2 — Channel Estimation SB2
Output: $H_{SB2}$

3 — Equalisation of LB5 with $H_{SB1}$
Output: $X_{LB5,scheme2}$

4 — Interpolation with $H_{SB1}$ and $H_{SB2}$
Output: $H_{LB1}$, $H_{LB2}$, $H_{LB3}$, $H_{LB4}$, $H_{LB5}$, $H_{LB6}$

5 — Equalisation of LB5 with $H_{LB5}$
Output: $X_{LB5,scheme1}$

6 — Calculate decision metric from $X_{LB5, scheme1}$
Output: $D_{scheme1}$

7 — Calculate decision metric from $X_{LB5, scheme2}$
Output: $D_{scheme2}$

8 — $D_{scheme1} > FD_{scheme2}$

9a — yes — Equalisation of LB1 to 6 with $H_{SB1}$

9b — no — Equalisation of Lb1 to 6 with $H_{LB1}$ to $H_{LB6}$

**European Patent Office**

**EUROPEAN SEARCH REPORT**

Application Number

EP 06 01 9701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 00/02328 A (ERICSSON INC [US]) 13 January 2000 (2000-01-13) * page 1, line 9 - page 2, line 26 * * page 7, line 28 - page 8, line 7 * * page 9, line 11 - page 14, line 25 * * figures 3,4 * | 1-11 | INV. H04L25/02 H04L25/03 |
| Y,D | MICHELE MORELLI ET AL: "A Comparison of Pilot-Aided Channel Estimation Methods for OFDM Systems" IEEE TRANSACTIONS ON SIGNAL PROCESSING, IEEE SERVICE CENTER, NEW YORK, NY, US, vol. 49, no. 12, December 2001 (2001-12), XP011059500 ISSN: 1053-587X Sections I, II | 1-11 | |
| A | AKHTMAN J ET AL: "Generic Reduced-Complexity MMSE Channel Estimation for OFDM and MC-CDMA" VEHICULAR TECHNOLOGY CONFERENCE, 2005. VTC 2005-SPRING. 2005 IEEE 61ST STOCKHOLM, SWEDEN 30 APRIL - 01 MAY 2005, PISCATAWAY, NJ, USA,IEEE, 30 May 2005 (2005-05-30), pages 528-532, XP010855449 ISBN: 0-7803-8887-9 Section I | 1-11 | |
| A | EP 1 067 709 A1 (MITSUBISHI ELECTRIC CORP [JP]) 10 January 2001 (2001-01-10) * abstract * * paragraph [0002] - paragraph [0007] * * paragraph [0029] - paragraph [0031] * * paragraph [0042] - paragraph [0083] * * figures 1-9 * | 1-11 | TECHNICAL FIELDS SEARCHED (IPC) H04L |

-/--

The present search report has been drawn up for all claims

| Place of search | Date of completion of the search | Examiner |
|---|---|---|
| Munich | 20 March 2007 | Gavin Alarcon, Oscar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

European Patent
Office

## EUROPEAN SEARCH REPORT

Application Number

EP 06 01 9701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 00/22791 A (ERICSSON TELEFON AB L M [SE]) 20 April 2000 (2000-04-20) * page 6, line 23 - page 9, line 19 * * figure 4 * ----- | 1-11 | |
| | | | TECHNICAL FIELDS SEARCHED (IPC) |

The present search report has been drawn up for all claims

| Place of search | Date of completion of the search | Examiner |
|---|---|---|
| Munich | 20 March 2007 | Gavin Alarcon, Oscar |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                      

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 06 01 9701

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2007

| Patent document cited in search report | | Publication date | Patent family member(s) | | Publication date |
|---|---|---|---|---|---|
| WO 0002328 | A | 13-01-2000 | AU | 3787799 A | 24-01-2000 |
| | | | BR | 9911730 A | 20-03-2001 |
| | | | CN | 1308792 A | 15-08-2001 |
| | | | DE | 69910035 D1 | 04-09-2003 |
| | | | EE | 200000782 A | 15-04-2002 |
| | | | EP | 1092280 A1 | 18-04-2001 |
| | | | HK | 1039537 A1 | 09-07-2004 |
| | | | US | 6263030 B1 | 17-07-2001 |
| EP 1067709 | A1 | 10-01-2001 | CN | 1294790 A | 09-05-2001 |
| | | | WO | 0044108 A1 | 27-07-2000 |
| | | | US | 6304599 B1 | 16-10-2001 |
| WO 0022791 | A | 20-04-2000 | AT | 298956 T | 15-07-2005 |
| | | | AU | 1303600 A | 01-05-2000 |
| | | | CN | 1329789 A | 02-01-2002 |
| | | | DE | 69926008 D1 | 04-08-2005 |
| | | | DE | 69926008 T2 | 01-12-2005 |
| | | | EP | 1119953 A1 | 01-08-2001 |
| | | | JP | 2002527997 T | 27-08-2002 |
| | | | MX | PA01003389 A | 24-04-2002 |
| | | | TR | 200100975 T2 | 23-07-2001 |
| | | | US | 6373888 B1 | 16-04-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. MORELLI.** A Comparison of Pilot-Aided Channel Estimation Methods for OFDM Systems. *IEEE Trans. on Signal Proc,* 2001, vol. 49 (12

- **L.HANZO.** OFDM and MC-CDMA. Wiley, 2003
- Physical Layer aspects for E-UTRA. *3GPP TR 25.814*